(19) Europäisches Patentamt
European Patent Office
Office européen des brevets

(11) Numéro de publication : **0 392 928 B1**

# (12) FASCICULE DE BREVET EUROPEEN

(45) Date de publication du fascicule du brevet : **27.07.94 Bulletin 94/30**

(51) Int. Cl.$^5$ : **A01N 63/00**

(21) Numéro de dépôt : **90401016.2**

(22) Date de dépôt : **12.04.90**

## (54) Procédé de lutte contre l'Eudémis et la cochylis de la vigne, mettant en oeuvre un baculovirus de polyèdrose nucléaire.

(30) Priorité : **12.04.89 FR 8904834**

(43) Date de publication de la demande : **17.10.90 Bulletin 90/42**

(45) Mention de la délivrance du brevet : **27.07.94 Bulletin 94/30**

(84) Etats contractants désignés : **CH DE GR IT LI**

(56) Documents cités :
**FR-A- 2 532 522**
**H.D. BURGES et al.: "Microbial control of insects and mites", 1971, pages 497-499, Academic Press, Londres, GB**

(73) Titulaire : **CALLIOPE S.A.**
**7, rue du Chapeau Rouge**
**F-34500 Béziers (FR)**

(72) Inventeur : **Biache, Gérard Auguste**
**15 Bis, rue de la Mairie,**
**Saulx Marchais**
**F-78650 Beynes (FR)**
Inventeur : **Guillon, Michel**
**3, rue Pablo Picasso**
**F-34500 Beziers (FR)**

(74) Mandataire : **Kedinger, Jean-Paul et al**
**c/o Cabinet Malemont**
**42, avenue du Président Wilson**
**F-75116 Paris (FR)**

EP 0 392 928 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de lutte contre Lobesia botrana et Eupoecilia ambiguella, ce procédé mettant en oeuvre un baculovirus de polyèdrose nucléaire.

Lobesia botrana et Eupoecilia ambiguella sont des ravageurs bien connus de la vigne, encore appelés respectivement Eudémis de la vigne et Cochylis de la vigne. Dans le cadre de la lutte contre ces ravageurs, on a fait appel aux insecticides chimiques dont la toxicité à l'égard des vertébrés en général et de l'Homme en particulier, oblige toutefois à de sévères précautions d'emploi.

Aussi, le but de la présente invention est il de proposer un insecticide d'utilisation beaucoup plus aisée et plus sure pour l'environnement. Cette invention repose sur la mise en évidence surprenante que le virus naturel (baculovirus de polyèdrose nucléaire) de la noctuelle Mamestra brassicae (parasite du chou), lorsqu'il est ingéré par les chenilles Lobesia botrana et Eupoecilia ambiguella, provoque une mortalité importante de ces chenilles.

En conséquence, un premier objet de la présente invention, réside dans un procédé de lutte contre les ravageurs de la vigne, Lobesia botrana et Eupoecilia ambiguella, qui se caractérise en ce qu'il comprend le traitement de la vigne par le baculovirus de la polyèdrose nucléaire de la noctuelle Mamestra brassicae.

Les baculovirus ayant généralement une activité virale très spécifique, il est tout à fait inattendu que le baculovirus particulier mis en oeuvre dans la présente invention, ait une activité à l'égard de ravageurs, les chenilles Lobesia botrana et Eupoecilia ambiguella, aussi différents de la chenille de la noctuelle Mamestra brassicae, puisque Lobesia botrana et Eupoecilia ambiguella d'une part, et Mamestra brassicae d'autre part, occupent des positions très éloignés dans la classification systématique.

Au sujet du baculovirus de la polyèdrose nucléaire de Mamestra brassicae, on précisera qu'il a fait l'objet de plusieurs études fondamentales qui ont permis de le caractériser. On peut citer par exemple JURKOVICOVA M., L. VAN TOUM, S. S. SUSSENBACH et J. TER SHEGGET dans Virology, vol. 93, 1979, pages 8-19 ainsi que VLAK J. et A. GRONER dans Journal for Invertebrate Pathology, vol. 35, 1980, pages 269-278.

En outre, une souche de ce baculovirus a fait l'objet d'un dépôt dans la Collection Nationale de cultures de Microorganismes de l'Institut Pasteur (Paris) le 1$^{er}$ septembre 1982 sous le numéro I-204. On ajoutera encore qu'un procédé d'isolement dudit baculovirus a été décrit en détail dans la demande de brevet français No 87 17748.

Par ailleurs, la Demanderesse a déjà eu l'occasion (voir brevet français No 82 15097) d'expérimenter sur les ravageurs lépidoptères noctuidae et en particulier sur Mamestra brassicae, Spodoptera littoralis, Spodoptera frugiperda et Heliothis virescens, des compositions insecticides contenant, en tant que principe actif, un mélange constitué par le baculovirus de la polyèdrose nucléaire de Mamestra brassicae et au moins un pyréthrinoïde de synthèse photostable, l'activité de ces compositions s'étant révélée telle que le pyréthrinoïde et/ou le baculovirus pouvaient être utilisés à des doses réduites par rapport à celles préconisées pour l'application sur le terrain de chacun de ces constituants pris seuls.

Or, la Demanderesse vient de mettre en évidence que le traitement de la vigne infestée par Lobesia botrana et/ou Eupoecilia ambiguella , conjointement par le baculovirus défini ci-dessus et un pyréthrinoïde de synthèse, en particulier l'esfenvalérate, conduit à un taux de mortalité de Lobesia botrana et Eupoecilia ambiguella supérieur à la somme des taux de mortalité obtenus avec les principes actifs utilisés seuls. La mise en évidence de l'efficacité particulièrement intéressante d'un tel traitement contre Lobesia botrana et Eupoecilia ambiguella est tout à fait surprenante compte-tenu de la nature très différente des lépidoptères noctuidae spécifiquement mentionnés dans le brevet français No 8215097 et de Lobesia botrana et Eupoecilia ambiguella du fait de leur position très éloignée dans la classification systématique et de la grande spécificité de l'action virale des baculovirus de polyèdrose nucléaire. Il apparait donc que rien ne pouvait laisser supposer a priori qu'un traitement au moyen des compositions décrites dans ledit brevet français et en particulier d'une composition comprenant ledit baculovirus et l'esfenvalérate, pouvait présenter l'intérêt tout particulier souligné ci-dessus contre Lobesia botrana et Eupoecilia ambiguella.

En conséquence, un second objet de la présente invention consiste dans un procédé de lutte contre Lobesia botrana et Eupoecilia ambiguella, comprenant le traitement de la vigne par le baculovirus de la polyèdrose nucléaire de Mamestra brassicae et au moins un pyréthrinoïde de synthèse, ledit baculovirus et ledit pyréthrinoïde pouvant être mis en oeuvre, soit conjointement et de préférence sous la forme d'un mélange, soit successivement c'est-à-dire appliqués successivement sur la vigne à traiter.

Un troisième objet de la présente invention réside dans l'utilisation du baculovirus de la polyèdrose nucléaire de Mamestra brassicae, éventuellement en mélange avec au moins un pyréthrinoïde de synthèse pour la préparation d'un insecticide utile pour la lutte contre les insectes ravageurs de la vigne, Lobesia botrana et Eupoecilia ambiguella.

Dans le but de réaliser un traitement aussi efficace que possible, on préfère selon l'invention choisir le

pyréthrinoïde de synthèse parmi les pyréthrinoïdes photostables. A titre d'exemples de pyréthrinoïdes de synthèse photostables, on citera les composés de formule

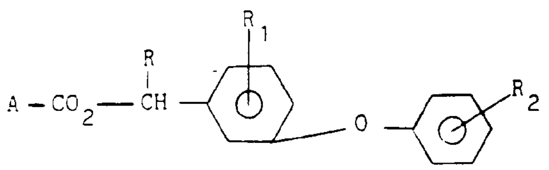

(I)

dans laquelle :

- R représente un atome d'hydrogène, un radical alkyle renfermant de 1 à 4 atomes de carbone, un radical alcynyle renfermant de 2 à 8 atomes de carbone ou un groupement nitrile,
- $R_1$ et $R_2$ représentent tous deux un atome d'hydrogène, ou représentent l'un un atome d'hydrogène et l'autre un atome de fluor ou de chlore, et
- A représente :
  a) soit un radical :

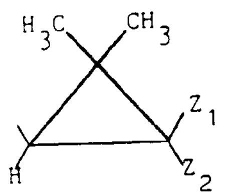

dans lequel :

- ou bien $Z_1$ et $Z_2$ représentent chacun un radical méthyle,
- ou bien $Z_1$ représente un atome d'hydrogène et $Z_2$ représente :
  . soit un radical de formule :

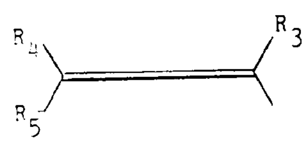

dans lequel $R_3$ représente un atome d'hydrogène ou d'halogène et $R_4$ et $R_5$, identiques ou différents, représentent un atome d'halogène ou un radical alkyle renfermant de 1 à 8 atomes de carbone ou forment ensemble un radical cycloalkyle comportant de 3 à 6 atomes de carbone ou un radical :

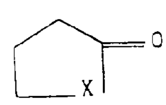

où la cétone est en α par rapport à la double liaison et dans lequel X représente un atome d'oxygène ou de soufre ou un radical NH,

. soit un radical de formule :

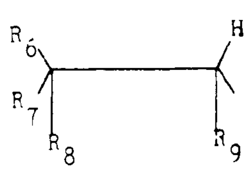

dans lequel $R_6$ à $R_9$, identiques ou différents, représentent chacun un atome d'halogène,

b) soit un radical :

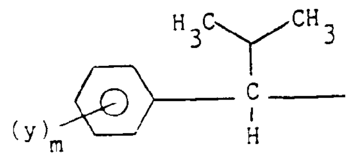

où Y représente un atome d'hydrogène, un atome d'halogène, un radical alkyle renfermant de 1 à 8 atomes de carbone ou un radical alcoxy renfermant de 1 à 8 atomes de carbone et m = 0, 1 ou 2,

ces composés pouvant se présenter sous la forme de l'un de leurs isomères ou sous la forme d'un mélange de leurs isomères.

On notera que dans la formule (I) ci-dessus :

lorsque R représente un radical alkyle, il s'agit de préférence du radical méthyle ou éthyle,

lorsque R représente un radical alcynyle, il s'agit de préférence du radical éthynyle,

lorsque $R_4$ et $R_5$ représentent tous deux un atome d'halogène, il s'agit de préférence du même atome d'halogène,

$R_3$ et $R_6$ à $R_9$ représentent de préférence des atomes de chlore ou de brome,

lorsque Y représente un radical alkyle, il s'agit de préférence du radical méthyle, éthyle, i-propyle, n-butyle ou t-butyle,

lorsque Y, $R_4$ et/ou $R_5$ représentent un atome d'halogène, il s'agit de préférence d'un atome de chlore, et

lorsque Y représente un radical alcoxy, il s'agit de préférence du radical méthoxy.

Parmi les pyréthrinoïdes photostables de synthèse appropriés aux fins de l'invention , on citera à titre d'exemples les composés ci-après pour lesquels on a indiqué entre crochets la dénomination commune internationale :

- 1R, cis 2,2-diméthyl 3-(2,2-dibromovinyl) cyclopropane carboxylate de (S) α-cyano 3-phénoxy benzyle [deltaméthrine],
- dl cis trans 2,2-diméthyl 3-(2,2-dichlorovinyl) cyclopropane 1-carboxylate de RS α-cyano 3-phénoxy benzyle (cis/trans 30/10) [cyperméthrine],
- dl cis trans 2,2-diméthyl 3-(2,2-dichlorovinyl) cyclopropane 1-carboxylate de RS α-cyano 3-phénoxy benzyle (à 90 % de cis) [cyperméthrine HI cis],
- dl cis trans 2,2-diméthyl 3-(2′,2′-dichlorovinyl) cyclopropane carboxylate de dl α-cyano (3-phénoxy 4-fluorophényl) méthyle [cyfluthrine],
- 2-parachlorophényl 2-isopropylacétate de (S) α-cyano 3-phénoxy benzyle [fenvalérate],
- (S) 2-parachlorophényl 2-isopropylacétate de (S) α-cyano 3-phénoxy benzyle [esfenvalérate],
- dl 2-(4-difluorométhyl oxyphényl) 2-isopropyl acétate de dl α-cyano 3-phénoxy benzyle [flucitrinate],
- 1R, cis (2′,2′,2′-tribromo 1′-bromoéthyl) 2,2-diméthyl cyclopropane carboxylate de (S) α-cyano 3-phénoxy benzyle [tralométhrine],
- 1R, cis (2′,2′-dichloro 1′,2′-dibromoéthyl) 2,2-diméthyl cyclopropane carboxylate de (S) α-cyano 3-phénoxy benzyle [tralocythrine],

une préférence toute particulière étant donné à l'esfenvalérate.

On donnera ci-après la description d'un certain nombre d'expérimentations pratiquées, à titre d'exemple, sur Lobesia botrana ainsi que les résultats obtenus pour ces dernières.

I/ Expérimentation au laboratoire

A/ Activité du baculovirus de la polyèdrose nucléaire de Mamestra brassicae contre Lobesia botrana

1) Méthode et matériel

Les essais ont été réalisés par ingestion libre d'un milieu nutritif contaminé par l'insecticide à tester, par des chenilles Lobesia botrana. Les constituants dudit milieu nutritif sont les suivants :

| | |
|---|---|
| eau | 816 g |

| | |
|---|---|
| agar | 15 g |
| farine de grains de maïs broyés | 48 g |
| germe de blé | 65 g |
| levure de bière | 48 g |
| acide ascorbique | 4,2 g |
| acide benzoïque | 1,44 g |
| Nipagine | 1,44 g |
| huile de germe de maïs | 1,44 g |

Le milieu nutritif encore liquide est distribué dans des boites cylindriques de 25 mm de diamètre et de 7 mm de hauteur, à raison de 2 ml par boite.

Après gélification complète, on dépose dans chaque boite au moyen d'une micropipette, 0,1 ml d'une suspension aqueuse présentant différentes concentrations en insecticide à tester. L'humidité ainsi apportée est éliminée par séchage par passage des boites dans une hotte à flux laminaire horizontal chauffé.

Dans chaque boite on dépose un morceau de toile de nylon de 6 mm de côté (1 maille par mm2) sur le milieu.

Une chenille de Lobesia botrana au premier stade larvaire à l'éclosion est mise en contact du milieu traité dans chaque boite.

Les chenilles sont alors élevées sur le milieu traité, en enceinte climatique, à 25° C ± 1° C, une humidité relative de 60 % ± 5 % et une photopériode 16 heures sur 24 heures. On note le pourcentage de chenilles mortes (en prenant en compte la mortalité d'une série témoin - correction de Abbot) depuis le stade L1 jusqu'à la chrysalidation.

Le baculovirus de la polyèdrose nucléaire de Mamestra brassicae utilisé a été obtenu dans une unité pilote de fabrication à partir de chenilles de Mamestra brassicae, nourries sur milieu artificiel et infectées au cinquième stade.

Chaque expérimentation comporte une référence à un insecticide chimique, à savoir l'esfenvalérate (marque de fabrique : SUMI-ALPHA).

Le baculovirus et l'esfenvalérate sont chacun mis en oeuvre sous la forme d'une suspension aqueuse comprenant 0,05 % d'un mouillant dépourvu d'activité insecticide (Etaldyne) et des quantités variables soit de baculovirus, soit d'esfenvalérate.

2) Résultats

Les résultats obtenus sont rassemblés dans le tableau 1 ci-après.

Ces résultats montrent tout d'abord une action du virus liée à la dose mise en oeuvre. Par ailleurs, ils mettent en évidence une action insecticide tout à fait intéressante du virus contre Lobesia botrana, la dose léthale 50 (dose provoquant une mortalité de 50 % des insectes par application de l'insecticide) pouvant être estimée à environ 352 polyèdres/mm2.

B/ Activité de l'association du baculovirus de la polyèdrose nucléaire de Mamestra brassicae et d'un pyréthrinoïde de synthèse, contre Lobesia botrana

1) Méthode et matériel

La méthode est identique à celle décrite sous le point A/ 1) ci-dessus.

Le baculovirus de la polyèdrose nucléaire de Mamestra brassicae est le même que celui dont il est fait état au point A/ 1) ci-dessus.

Le pyréthrinoïde de synthèse est constitué par l'esfenvalérate (marque de fabrique SUMI-ALPHA).

Les expérimentations sont menées :

- avec le baculovirus seul,
- avec l'esfenvalérate seul, et
- avec l'association baculovirus/esfenvalérate,

ceux-ci étant chacun mis en oeuvre sous la forme d'une suspension aqueuse comprenant 0,05 % d'un mouillant dépourvu d'activité insecticide (Etaldyne).

2) Résultats

Les résultats obtenus sont rassemblés dans le tableau 2 ci-après.

Ces résultats montrent que le traitement conjoint par le baculovirus et l'esfenvalérate provoque de manière

tout à fait inattendue une mortalité supérieure à la somme des mortalités provoquées par les principes actifs utilisés seuls. Ainsi, l'esfenvalérate utilisé seul à la dose de $3,13.10^{-12}$ g/mm2 provoque une mortalité qui n'est que de 6 %, alors qu'en association avec le baculovirus, il conduit à des mortalités de 26, 35 et 44 % supérieures aux mortalités maximales auxquelles on pouvait normalement s'attendre, c'est-à-dire respectivement 17, 25 et 28 %. Il apparait également que l'association selon l'invention permet, en dépit de la faible dose d'esfenvalérate mise en oeuvre ($3,13.10^{-12}$ g/mm2), d'obtenir de façon surprenante une protection contre Lobesia botrana supérieure à celle obtenue quand l'esfenvalérate est utilisé seul à une dose aussi élevée que $100.10^{-12}$ g/mm2. Il est donc clair que l'association selon l'invention est d'une utilisation beaucoup plus sure pour l'environnement.

II/ Expérimentation sur le terrain de l'activité du baculovirus de la polyèdrose nucléaire de Mamestra brassicae contre Lobesia botrana

1) Matériel et méthode mis en oeuvre pour les expérimentations

Le baculovirus, préparé de la même manière que ci-dessus, est mis sous la forme d'une formulation dénommée ci-après Mamestrin et dont le titre est $2,5 \times 10^{12}$ polyèdres/litre. Mamestrin est appliquée sur la vigne par pulvérisation sous la forme d'une suspension aqueuse comprenant Mamestrin et 0,05 % d'Etaldyne (agent mouillant).

Tous les essais sont exécutés sur des populations naturelles de ravageurs Lobesia botrana. Les méthodes de notation et de mesure sont inspirées de la méthode objet de la note n° 100 de la Commission Des Essais Biologiques. Les chenilles vivantes de Lobesia botrana sont dénombrées sur 100 grappes consécutives par parcelle élémentaire en fin de vie larvaire, soit 23 à 30 jours après l'application du baculovirus. La méthode d'extraction des chenilles est la méthode dite "de la saumure", qui consiste à tremper les grappes récoltées dans une solution aqueuse de chlorure de sodium, puis à compter les chenilles surnageant à la surface.

2) Résultats

Une analyse statistique effectuée sur l'ensemble des essais réalisés [analyse de variance après transformation des données initiales ($\sqrt{x}$)], conduit aux moyennes (pour probabilité de 0,05 %) rassemblées dans le tableau 3 ci-après.

Ces résultats confirment la sensibilité des chenilles Lobesia botrana au baculovirus de la polyèdrose nucléaire de Mamestra brassicae.

En vue du traitement selon l'invention des vignes infestées par Lobesia botrana et Eupoecilia ambiguella, le baculovirus de la polyèdrose nucléaire de Mamestra brassicae et l'association de ce baculovirus avec un pyréthrinoïde de synthèse, peuvent notamment être utilisés sous la forme de poudre, granulés, suspension, émulsion ou autres formulations habituellement employées dans le domaine des insecticides, de préférence en combinaison avec d'autres ingrédients tels qu'un véhicule comme l'eau, des alcools, des solvants organiques ; des poudres comme le talc, les argiles, les silicates ou le Kieselguhr ; des agents tensio-actifs par exemple des agents tensio-actifs non ioniques ; ou d'autres agents pesticides.

On notera que ledit baculovirus et le pyréthrinoïde de synthèse peuvent être conditionnés séparément et mis en oeuvre séparément ; en variante, ils peuvent être conditionnés séparément, par exemple sous forme de poudres mouillables pour le baculovirus et de concentrés émulsifiables pour le pyréthrinoïde, puis mélangés, avant utilisation, avec les ingrédients susmentionnés.

Enfin, conformément à l'invention, le baculovirus de la polyèdrose de Mamestra brassicae, lorsqu'il est mis en oeuvre seul, pourra être utilisé à raison de $1.10^{12}$ à $1.10^{13}$ polyèdres/ha de vigne traitée. Dans le cas de la mise en oeuvre de l'association baculovirus/pyréthrinoïde de synthèse, le baculovirus pourra être utilisé à une dose de $10^{11}$ à $10^{12}$ polyèdres/ha conjointement avec une dose pyréthrinoïde de 1 à 10 g/ha, notamment 2 à 2,5 g/ha.

TABLEAU 1

(résultats de l'expérimentation en laboratoire sur l'activité du baculovirus de la polyèdrose nucléaire de *Mamestra brassicae* sur *Lobesia botrana*)

| Variante | Dose de matière active/$mm^2$ de milieu nutritif | Nombre de chenilles traitées | Mortalité (%) |
|---|---|---|---|
| Témoin | - | - | Correction Abbot |
| SUMI-ALPHA | $1,56.10^{-12}$g | 100 | 5 |
| | $3,13.10^{-12}$g | 200 | 13 |
| | $6,26.10^{-12}$g | 200 | 15 |
| | $12,50.10^{-12}$g | 150 | 30 |
| | $25,00.10^{-12}$g | 100 | 36 |
| | $100,00.10^{-12}$g | 100 | 40 |
| | $400,00.10^{-12}$g | 100 | 97 |
| Baculovirus | 50 polyèdres | 150 | 7 |
| | 125 " | 150 | 19 |
| | 250 " | 200 | 23 |
| | 500 " | 150 | 78 |
| | 1000 " | 150 | 83 |
| | 6250 " | 100 | 98 |

TABLEAU 2

(résultats de l'expérimentation en laboratoire sur l'activité de l'association esfenvalérate/baculovirus de la polyèdrose nucléaire de *Mamestra brassicae*, sur *Lobesia botrana*)

| Variante | Dose de matière active/mm$^2$ de milieu nutritif | Nombre de chenilles traitées | Mortalité (%) |
|---|---|---|---|
| Témoin | - | - | Correction Abbot |
| SUMI-ALPHA (esfenvalérate) | $3,13.10^{-12}$g<br>$100,00.10^{-12}$g | 200<br>100 | 6<br>40 |
| Baculovirus | 50 polyèdres<br>125 "<br>250 " | 100<br>100<br>100 | 11<br>19<br>22 |
| SUMI-ALPHA + Baculovirus | $3,13.10^{-12}$g + 50 polyèdres | 100 | 26 |
| SUMI-ALPHA + Baculovirus | $3,13.10^{-12}$g + 125 polyèdres | 100 | 35 |
| SUMI-ALPHA + Baculovirus | $3,13.10^{-12}$g + 250 polyèdres | 100 | 44 |

TABLEAU 3

(résultats de l'expérimentation sur le terrain sur l'activité contre Lobesia botrana du baculovirus de la polyèdrose nucléaire de Mamestra brassicae)

| Variante | Dose de matière active/ha de vigne traitée | Moyenne du nombre de chenilles restantes vivantes pour 100 grappes |
|---|---|---|
| Témoin | - | 435,14 |
| SUMI-ALPHA (esfenvalérate) | 2,5 | 186,87 |
| Baculovirus | $2{,}5.10^{12}$ polyèdres<br>$1.10^{13}$ polyèdres | 214,62<br>221,71 |

## Revendications

1. Procédé de lutte contre les insectes ravageurs de la vigne, Lobesia botrana et Eupoecilia ambiguella, caractérisé en ce qu'il comprend le traitement de la vigne par le baculovirus de la polyèdrose nucléaire de Mamestra brassicae.

2. Procédé selon la revendication 1, caractérisé en ce que ledit baculovirus est mis en oeuvre conjointement avec au moins un pyréthrinoïde de synthèse.

3. Procédé selon les revendications 1 et 2, caractérisé en ce que ledit baculovirus et ledit pyréthrinoïde sont mis en oeuvre sous la forme d'un mélange.

4. Procédé selon la revendication 2, caractérisé en ce que ledit baculovirus et au moins un pyréthrinoïde de synthèse sont mis en oeuvre successivement.

5. Procédé selon l'une quelconque des revendications 2 à 4 précédentes, caractérisé en ce que le pyréthrinoïde de synthèse est choisi parmi les pyréthrinoïdes photostables.

6. Procédé selon la revendication 5, caractérisé en ce que le pyréthrinoïde de synthèse photostable est un composé de formule

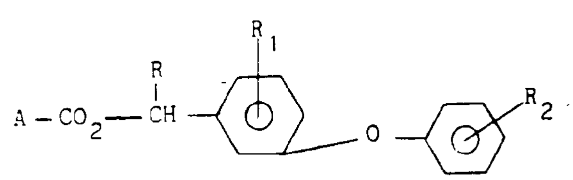

(I)

dans laquelle :

- R représente un atome d'hydrogène, un radical alkyle renfermant de 1 à 4 atomes de carbone, un radical alcynyle renfermant de 2 à 8 atomes de carbone ou un groupement nitrile,
- $R_1$ et $R_2$ représentent tous deux un atome d'hydrogène, ou représentent l'un un atome d'hydrogène et l'autre un atome de fluor ou de chlore, et
- A représente :

  a) soit un radical :

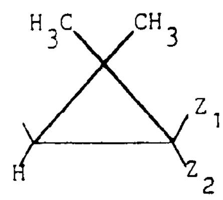

dans lequel :

- ou bien $Z_1$ et $Z_2$ représentent chacun un radical méthyle,
- ou bien $Z_1$ représente un atome d'hydrogène et $Z_2$ représente :

  . soit un radical de formule :

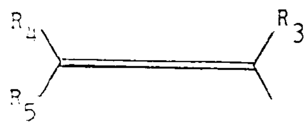

dans lequel $R_3$ représente un atome d'hydrogène ou d'halogène et $R_4$ et $R_5$, identiques ou différents, représentent un atome d'halogène ou un radical alkyle renfermant de 1 à 8 atomes de carbone ou forment ensemble un radical cycloalkyle comportant de 3 à 6 atomes de carbone ou un radical :

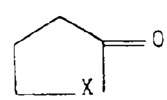

où la cétone est en $\alpha$ par rapport à la double liaison et dans lequel X représente un atome d'oxygène ou de soufre ou un radical NH,

  . soit un radical de formule :

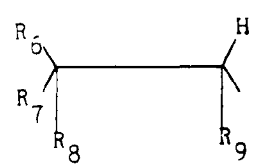

dans lequel $R_6$ à $R_9$, identiques ou différents, représentent chacun un atome d'halogène,

  b) soit un radical :

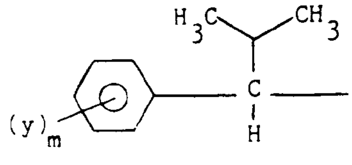

où Y représente un atome d'hydrogène, un atome d'halogène, un radical alkyle renfermant de 1 à 8 atomes de carbone ou un radical alcoxy renfermant de 1 à 8 atomes de carbone et m = 0, 1 ou 2,

ce composé pouvant se présenter sous la forme de l'un de ses isomères ou sous la forme d'un mélange de ses isomères.

7. Procédé selon la revendication 5 ou 6, caractérisé en ce que le pyréthrinoïde est le (S) 2-parachlorophényl 2-isopropylacétate de (S) α-cyano 3-phénoxy benzyle [esfenvalérate].

8. Procédé selon la revendications 1, caractérisé en ce que le baculovirus est utilisé à une dose de $1.10^{12}$ à $1.10^{13}$ polyèdres/ha de vigne à traiter.

9. Procédé selon l'une quelconque de revendications 2 à 7, caractérisé en ce que le baculovirus est utilisé à une dose de $10^{11}$ à $10^{12}$ polyèdres/ha de vigne à traiter et en ce que le pyréthrinoïde est l'esfenvalérate utilisé à une dose de 1 à 10 g/ha.

10. Utilisation du baculovirus de la polyèdrose nucléaire de Mamestra brassicae ou d'un mélange de ce baculovirus et d'au moins un pyréthrinoïde de synthèse pour la préparation d'un insecticide utile pour la lutte contre les insectes ravageurs des vignes, Lobesia botrana et Eupoecilia ambiguella.

11. Utilisation selon la revendication 10, caractérisée en ce que le pyréthrinoïde est un pyréthrinoïde de synthèse photostable répondant à la formule (I) définie à la revendication 6.

12. Utilisation selon la revendication 11, caractérisée en ce que le pyréthrinoïde de synthèse photostable est l'esfenvalérate.

## Claims

1. A method of fighting the vine ravaging insects, Lobesia botrana and Eupoecilia ambiguella, characterized in that it comprises the treatment of said vine with the baculovirus of the nuclear polyhedrose of Mamestra brassicae.

2. Method according to claim 1, characterized in that said baculovirus is used jointly with at least one synthetic pyrethrinoid.

3. Method according to claims 1 and 2, characterized in that said baculovirus and said pyrethrinoid are used in the form of a mixture.

4. Method according to claim 2, characterized in that said baculovirus and at least one synthetic pyrethrinoid are used successively.

5. Method according to any one of claims 2 to 4, characterized in that the synthetic pyrethrinoid is chosen from the photostable pyrethrinoids.

6. Method according to claim 5, characterized in that the photostable synthetic pyrethrinoid is a compound of formula :

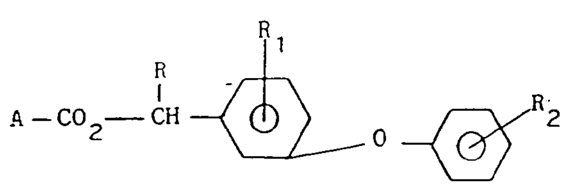

(I)

in which =

- R represents a hydrogen atom, an alkyl radical containing 1 to 4 carbon atoms, an alkynyl radical containing 2 to 8 carbon atoms or a nitrile group,
- $R_1$ and $R_2$ both represent a hydrogen atom or one represents a hydrogen atom and the other a fluorine

or chlorine atom, and

- A represents :

a) either a radical :

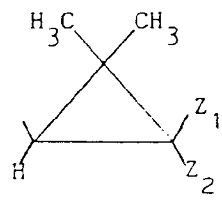

in which :

- either $Z_1$ and $Z_2$ each represent a methyl radical,
- or else $Z_1$ represents a hydrogen atom and $Z_2$ represents :

. either a radical of formula :

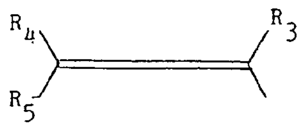

in which $R_3$ represents a hydrogen atom or halogen atom and $R_4$ and $R_5$, identical or different, represent a halogen atom or an alkyl radical containing from 1 to 8 carbon atoms or form together a cycloalkyl radical comprising from 3 to 6 carbon atoms or a radical :

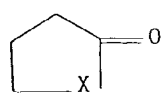

where the ketone is in α with respect to the double bond and in which X represents an oxygen or sulphur atom or a radical NH,

. or a radical of formula :

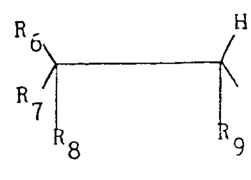

in which $R_6$ to $R_9$, identical or different, each represent a halogen atom,

b) or a radical :

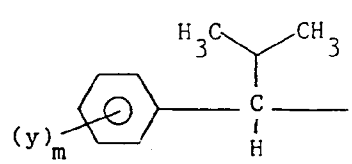

where Y represents a hydrogen atom, a halogen atom, an alkyl radical containing from 1 to 8 carbon atoms or an alkoxy radical containing from 1 to 8 carbon atoms and m = 0, 1 or 2,

this compound being in the form of one of its isomers or in the form of a mixture of its isomers.

7. Method according to claim 5 or 6, characterized in that the pyrethrinoid is (S) α-cyano-3-phenoxybenzyl (S) 2-parachlorophenyl-2-isopropylacetate (esfenvalerate).

8. Method according to claim 1, characterized in that the baculovirus is used at a dose of 1 x $10^{12}$ to 1 x $10^{13}$ polyhedres/ha of vine to be treated.

9. Method according to any one of claims 2 to 7, characterized in that the baculovirus is used at a dose of $10^{11}$ to $10^{12}$ polyhedres/ha of vine to be treated and the pyrethrinoid is esfenvalerate used at a dose of 1 to 10 g/ha.

10. Use of the baculovirus of the Mamestra brassicae nuclear polyhedrose or of a mixture of said baculovirus with at least one synthetic pyrethrinoid for the preparation of an insecticide useful in the fight against the vine ravaging insects, Lobesia botrana and Eupoecilia ambiguella.

11. Use according to claim 10, characterized in that the pyrethrinoid is a photostable synthetic pyrethrinoid corresponding to the formula (I) defined in claim 6.

12. Use according to claim 11, characterized in that the photostable synthetic pyrethrinoid is esfenvalerate.

## Patentansprüche

1. Verfahren zur Bekämpfung der Rebenschädlingsinsekten Lobesia botrana und Eupoecilia ambiguella, dadurch gekennzeichnet, daß es die Behandlung der Reben mit dem Bakulovirus der Kernpolyedrose Mamestra brassicae umfaßt.

2. Verfahren nach Anspruch 1, dadurch gekennzeichnet, daß der Bakulovirus zusammen mit wenigstens einem Synthese-Pyrethrinoid angesetzt wird.

3. Verfahren nach den Ansprüchen 1 und 2, dadurch gekennzeichnet, daß der Bakulovirus und das Pyrethrinoid in der Form einer Mischung angesetzt werden.

4. Verfahren nach Anspruch 2, dadurch gekennzeichnet, daß der Bakulovirus und wenigstens ein Synthese-Pyrethrinoid nacheinander angesetzt werden.

5. Verfahren nach einem der vorhergehenden Ansprüche 2 bis 4, dadurch gekennzeichnet, daß das Synthese-Pyrethrinoid unter den photostabilen Pyrethrinoiden ausgewählt wird.

6. Verfahren nach Anspruch 5, dadurch gekennzeichnet, daß das photostabile Synthese-Pyrethrinoid eine Verbindung der Formel

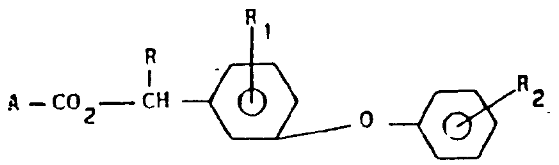

(I)

ist, bei welcher:
- R ein Wasserstoffatom, ein Alkylradikal mit 1 bis 4 Kohlenstoffatomen, ein Alkynylradikal mit 2 bis 8 Kohlenstoffatomen oder eine Nitrilgruppe darstellt,
- $R_1$ und $R_2$ alle beide ein Wasserstoffatom darstellen oder das eine ein Wasserstoffatom und das andere ein Fluor- oder ein Chloratom darstellt, und
- A entweder darstellt:
  a) ein Radikal:

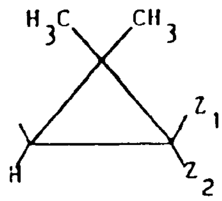

bei welchem:

- $Z_1$ und $Z_2$ entweder jeweils ein Methylradikal darstellen,
- oder $Z_1$ ein Wasserstoffatom darstellt und $Z_2$ darstellt:

entweder ein Radikal der Formel:

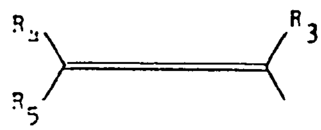

bei welcher $R_3$ ein Wasserstoff- oder ein Halogenatom darstellt und $R_4$ und $R_5$, identisch oder verschieden, ein Halogenatom oder ein Alkylradikal mit 1 bis 8 Kohlenstoffatomen darstellen oder zusammen ein Cykloalkylradikal bilden, welches 3 bis 6 Kohlenstoffatome aufweist, oder ein Radikal:

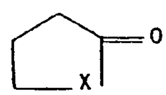

wo das Keton in Bezug auf die Doppelbindung ein α Keton ist und in welcher X ein Sauerstoff- oder Schwefelatom oder ein $NH_3$-Radikal darstellt,

oder ein Radikal der Formel:

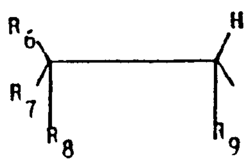

in welcher $R_6$ bis $R_9$, identisch oder verschieden, jeweils ein Halogenatom darstellen,

b) oder ein Radikal:

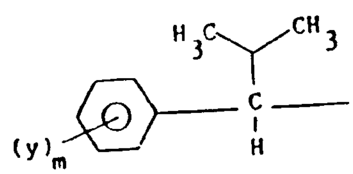

wo Y ein Wasserstoffatom, ein Halogenatom, ein Alkylradikal mit 1 bis 8 Kohlenstoffatomen oder ein Alkoxyradikal mit 1 bis 8 Kohlenstoffatomen darstellen und m = 0,1 oder 2,

wobei sich diese Verbindung in der Ausbildung einer ihrer Isomere oder in der Ausbildung einer Mischung ihrer Isomere anbieten kann.

**7.** Verfahren nach Anspruch 5 oder 6, dadurch gekennzeichnet, daß das Pyrethrinoid das (S) 2-Parachlorphenyl 2-Isopropylacetat des (S) α-Cyan 3-Phenoxy-Benzyl [Esfenvalerat] ist.

8. Verfahren nach Anspruch 1, dadurch gekennzeichnet, daß der Bakulovirus mit einer Dosis von $1.10^{12}$ bis $1.10^{13}$ Polyeder/ha des zu behandelnden Weinberges verwendet wird.

9. Verfahren nach einem der Ansprüche 2 bis 7, dadurch gekennzeichnet, daß der Bakulovirus mit einer Dosis von $10^{11}$ bis $10^{12}$ Polyeder/ha des zu behandelnden Weinberges verwendet wird und daß das Pyrethrinoid Esfenvalerat ist, welches mit einer Dosis von 1 bis 10 g/ha verwendet wird.

10. Verwendung des Bakulovirus der Kernpolyedrose Mamestra brassicae oder einer Mischung dieses Bakulovirus und wenigstens eines Synthese-Pyrethrinoids für die Herstellung eines Insektizids, welches für die Bekämpfung der Rebenschädlingsinsekten Lobesia botrana und Eupoecilia ambiguella nützlich ist.

11. Verwendung nach Anspruch 10, dadurch gekennzeichnet, daß das Pyrethrinoid ein photostabiles Synthese-Pyrethrinoid ist, welches der im Anspruch 6 definierten Formel (I) entspricht.

12. Verwendung nach Anspruch 11, dadurch gekennzeichnet, daß das photostabile Synthese-Pyrethrinoid Esfenvalerat ist.